# EUROPEAN PATENT APPLICATION

(11) **EP 4 364 939 A1**
(43) Date of publication of application: **08.05.2024**
(21) Application number: 22205200.3
(22) Date of filing: 03.11.2022
(51) Int. Cl.: B32B 17/10

(54) **ION-CONDUCTIVE THERMOPLASTIC INTERLAYERS FOR ELECTROCHROMIC DEVICES**

(71) Applicant: Kuraray Europe GmbH, 65795 Hattersheim am Main (DE)
(72) Inventor: Mummy, Florian, 60325 Frankfurt am Main (DE); Bier, Felix, 76879 Ottersheim (DE)
(74) Representative: Janßen, Christian Oliver

(57) **Abstract**

The present invention relates to a relatively thin ion-conductive thermoplastic interlayer comprising a polyvinyl acetal, an electrolyte salt, and a dispersant for use in electrochromic devices.

## Description

The present invention relates to a relatively thin ion-conductive thermoplastic interlayer for use in electrochromic devices, such interlayer comprising a polyvinyl acetal, an electrolyte salt, and a dispersant.

Composite glazing, the transparency and/or colour of which can be modified by applying an electric voltage, are referred to as electrochromic glazing in the literature. Typically, electrochromic glazing comprises the following elements:
A first glass pane - a first transparent electrically conductive layer - an electrochromic layer - a solid or gel-type electrolyte - a redoxable ion storage layer - a second transparent electrically conductive layer - a second glass pane.

When applying a voltage to the two transparent electrically conductive layers, which serve as electrodes, the translucence is modified by means of a oxidation/reduction process in the electrochromic and redoxable layers separated by a solid electrolyte. The oxidation and reduction process is accompanied by an exchange of ions with the solid electrolyte. Consequently, the latter must have a sufficiently high ion concentration. Moreover, a correspondingly high ion conductivity of the solid electrolyte is required for a rapid switching operation.

A solid electrolyte for electrochromic glazing must also exhibit chemical and electrochemical stability as well as optical transparency, apart from said high ion conductivity in combination with high lithium ion mobility.

In commercial composite glazing without electrochromic properties, interlayer films of polyvinyl acetals like polyvinyl butyral (PVB) are frequently used. Polyvinyl butyral films have the advantage of exhibiting a high transparency and provide the glass laminates with good mechanical properties.

Consequently, the use of polyvinyl butyral films in electrochromic composite glazing is disclosed in EP1227362 and EP0657897. In order to guarantee a sufficiently high ion conductivity, a rather high content of dispersant is required in this case. However, such high dispersant contents negatively influence the mechanical properties of the laminates. In addition, extrusion of films with such dispersants is rather difficult, as these dispersants are typically highly flammable and exhibit low boiling points. Polyvinyl butyral interlayer films in electrochromic glazing of the prior art consequently possess either unsatisfactory ion conductivity with good mechanical stability or reasonable ion conductivity with reduced mechanical stability.

Consequently, it was an object of the present invention to provide ion-conductive thermoplastic interlayers with satisfactory long-term stability, a good ion conductivity and an improved switching behaviour of electrochromic glazing produced therefrom. A further objective of the present invention was to provide interlayers for electrochromic devices with lower manufacturing costs and/or higher optical quality, especially in terms of optical defects like wrinkles, bubbles or grains, less haze and/or less yellowness.

These and other problems have been solved by the present invention.

It has now been surprisingly found that rather thin interlayer films can be produced, especially applying the solvent casting method and using certain dispersants, which - due to their thinness - exhibit an increased ion conductivity and with that an improved switching behaviour while still maintaining the required mechanical characteristics and long-term stability.

Now therefore, a first aspect of the present invention relates to an ion-conductive thermoplastic interlayer comprising a polyvinyl acetal, an electrolyte salt, and a dispersant wherein the thickness of the ion-conductive thermoplastic interlayer is from 5 to 250 µm.

Preferably, the thickness of the ion-conductive thermoplastic interlayer is from 10 to 300 µm, more preferably from 20 to 250 µm and specifically from 30 to 100µm.

Preferably, the dispersant comprises a compound chosen from the list consisting of a inorganic solvent like thionyl chloride, polymeric electrolytes, cyclic organic carbonate, a linear organic carbonate, a lactone and a glycol. The dispersant can also comprise or consist of a mixture of any such dispersants and might additionally comprise a plasticizer like triethylenglykol-di-(2-ethylhexanoate) 2,2'-ethylenedioxydiethyl bis(2-ethylhexanoat).

Suitable linear organic carbonates include dialkyl carbonates with two identical or different alkyl groups with a chain lengths of 1 to 5 carbon atoms. Preferably, the linear organic carbonate is dimethyl carbonate.

Suitable lactones include α-acetolactone, β-propiolactone, γ-butyrolactone, and δ-valerolactone. Preferably, the lactone is γ-butyrolactone.

Suitable glycols include glycols with 1 to 4 ether units with one or several unbranched or branched alkyl substituents. Preferably, the glycol is diethylene glycol monobutyl ether.

More preferably, the dispersant is a cyclic organic carbonate, most preferably butylene carbonate or propylene carbonate, specifically propylene carbonate.

The concentration of the dispersant in the interlayer is from 40 % by weight to 10 % by weight, preferred between 35 and 20 % by weight based on the total weight of the ion-conductive thermoplastic interlayer.

Preferably, the electrolyte salt is a lithium salt, more preferably LiClO₄, LiBF₄, lithium trifluoromethanesulfonate or specifically lithium bis(trifluoromethanesulfonyl)imide.

The concentration of the electrolyte salt in the interlayer is from 1 % by weight to 30 % by weight based on the total weight of the ion-conductive thermoplastic interlayer.

In addition, the ion-conductive thermoplastic interlayer may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid, surface active substances as well as alkaline metal salts and/or alkaline earth salts of carboxylic acids as adhesion control agent.

The ion-conductive thermoplastic interlayer comprises one or more polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched compounds containing 2 to 10 carbon atoms.

Most preferably, the polyvinyl acetal is polyvinyl butyral.

It has been surprisingly found that polyvinyl acetals with a rather high acetate content lead to improved performance of the electrochromic devices as they have a very high tolerance to the dispersants used in accordance to the invention. Accordingly, the polyvinyl acetal preferably has a proportion of polyvinyl acetate groups of 7.5 to 20 mol%, more preferably 10 to 15 mol%.

The polyvinyl alcohol content of the polyvinyl acetal may be between 6 - 26 % by weight, 8 - 24 % by weight, 10 - 22 % by weight, 12 - 21 % by weight, 14 - 20 % by weight, 16 - 19 % by weight and preferably between 19 and 20 % by weight, 16 and 21 % by weight or 10 - 16 % by weight.

The vinyl alcohol content and vinyl acetate content of the polyvinyl acetal were determined in accordance with DIN ISO 3681 (acetate content) and DIN ISO 53240 (polyvinyl alcohol content).

Another aspect of the present invention concerns a process for the production of the inventive ion-conductive thermoplastic interlayer comprising the steps of
a. dissolving the polyvinyl acetal, the electrolyte salt, and the dispersant in a solvent;
b. solvent casting the solution on a carrier;
c. drying the casted film to remove the solvent; and
d. removing the dried casted film from the carrier.

The material of the carrier can be chosen from any material which is compatible with the polyvinyl acetal, the other components of the interlayer film as well as the solvent used in the production method. Thus, the carrier material could be glass or metal. However, it is preferred to use a polymer material selected from the group consisting of polylactic acid, acrylonitrile-butadienestyrene copolymer, polyamides, polycarbonates, polyethylene terephthalate (PET), polyethylene terephthalate copolymers, polyhydroxyalkanoates, polyurethanes, polyolefines such as polyethylene or polypropylenes, acrylonitrile styrene acrylate, polyacrylates and polymethacrylates, polyvinyl alcohol, TAC (cellulose tri acetate). Most preferably, the carrier contains polyethylene terephthalate (PET) and specifically, the carrier is a film consisting of PET.

Preferably, the thickness of the carrier is from 10 to 500 **µ**m, more preferably from 25 to 250 µm, and most preferably from 50 to 100 **µ**m.

The solvent can be any organic solvent suitable to dissolve the components of the interlayer film. The solvent should also evaporate relatively easily in order to accelerate the drying step. Esters, alcohols and ketones or mixtures thereof have been shown to be suitable solvents for the inventive process. Another aspect of the present invention concerns an electrochromic device comprising, in that order, a first glass pane, a first transparent electrically conductive layer, an electrochromic layer, the ion-conductive thermoplastic interlayer as described above, a redoxable ion storage layer, a second transparent electrically conductive layer and a second glass pane.

### Examples

### Preparation of the composite film

*A polyethylene terephthalate (PET) film (grade Hostaphan^{®}* - *commercially available from Mitsubishi Polyester Film GmbH* ) *with a thickness of 100 µm was used as carrier.*

*A 14.0* % *by weight solution of polyvinyl butyral (PVB) powder (commercially available grade Mowital^{®} B 75 H) and plasticizer (for film A: "OXSOFT 3G8" from OQ Chemicals (former: OXEA company), for film B: propylene carbonate from Sigma Aldrich) dissolved in ethanol was used as coating fluid. The weight ratio of PVB:plasticizer:Lithium-salt* was 70:25:5. *Li-salt*=*Lithiumbistrifluormethansulfonimidat commercially available from Sigma Aldrich*

A commercially available lab coating machine model: CX 202) and film applicator (model: UA-3000) from mtv Messtechnik in Erftstadt, Germany, was used. The coating speed was 40 mm per second. The coating was conducted at a temperature of 22 °C. The gap between the coating lip and the moving substrate was 800 µm.

The drying took place at room temperature (23 °C) overnight.

The carrier was peeled off from a sample of the composite to measure the thickness of the dry film A and B. The measurement was done using an electrical thickness gauge device (model: Minitest 600 from ElektroPhysik Dr. Steinroever GmbH, Köln/Germany). Film A and B had a thickness of 35 µm.

## Claims

1. An ion-conductive thermoplastic interlayer comprising a polyvinyl acetal, an electrolyte salt, and a dispersant wherein the thickness of the ion-conductive thermoplastic interlayer is from 5 to 250 µm.

2. The ion-conductive thermoplastic interlayer according to claim 1 wherein the dispersant comprises a compound chosen from the list consisting of a cyclic organic carbonate, a linear organic carbonate, a lactone and a glycol.

3. The ion-conductive thermoplastic interlayer according to claim 2 wherein the dispersant is a cyclic carbonate.

4. The ion-conductive thermoplastic interlayer according to claim 3 wherein the dispersant is propylene carbonate.

5. The ion-conductive thermoplastic interlayer according to any one of the claims above wherein the concentration of the dispersant in the interlayer is from 1 % by weight to 35 % by weight.

6. The ion-conductive thermoplastic interlayer according to any one of the claims above wherein the electrolyte salt is a lithium salt.

7. The ion-conductive thermoplastic interlayer according to any one of the claims above wherein the electrolyte salt is lithium bis(trifluoromethanesulfonyl)imide.

8. The ion-conductive thermoplastic interlayer according to any one of the claims above wherein the concentration of the electrolyte salt in the interlayer is from 1 % by weight to 30 % by weight.

9. The ion-conductive thermoplastic interlayer according to any one of the claims above wherein the polyvinyl acetal has a residual acetate content of 0.5 to 20 % by weight.

10. The ion-conductive thermoplastic interlayer according to any one of the claims above wherein the polyvinyl acetal is polyvinyl butyral.

11. The ion-conductive thermoplastic interlayer according to any one of the claims above wherein the thickness of the ion-conductive thermoplastic interlayer is from 10 to 100 µm.

12. The ion-conductive thermoplastic interlayer according to any one of the claims above wherein the ion-conductive thermoplastic interlayer is obtained by a solvent casting process using a solution comprising the polyvinyl acetal, the electrolyte salt, and the dispersant.

13. A process for the production of the ion-conductive thermoplastic interlayer according to any one of the claims above comprising the steps of
a. dissolving the polyvinyl acetal, the electrolyte salt, and the dispersant in a solvent;
b. solvent casting the solution on a carrier;
c. drying the casted film to remove the solvent; and
d. removing the dried casted film from the carrier.

14. An electrochromic device comprising, in that order, a first glass pane, a first transparent electrically conductive layer, an electrochromic layer, the ion-conductive thermoplastic interlayer according to any one of the claims 1 to 10, a redoxable ion storage layer, a second transparent electrically conductive layer and a second glass pane.
